# EUROPEAN PATENT APPLICATION

(11) **EP 4 428 841 A1**
(43) Date of publication of application: **11.09.2024**
(21) Application number: 24162411.3
(22) Date of filing: 08.03.2024
(51) Int. Cl.: G08G 5/00, G01C 21/00

(54) **SYSTEM AND METHOD FOR INTERDEPENDENT MOTION PLANNING OF DISSIMILAR AIRBORNE VEHICLES THROUGH AN AIRSPACE**

(30) Priority: 08.03.2023 US 202318119209
(71) Applicant: Rockwell Collins, Inc., Cedar Rapids, IA 52498 (US)
(72) Inventor: BUSH, Michael D., Cedar Rapids, IA (US); LIBERKO, Nicholas J., Marion, IA (US); MILLER, Garrett R., Cedar Rapids, IA (US)
(74) Representative: Dehns

(57) **Abstract**

A motion planning system (100) and method receives requests (108) for routing a set of dissimilar aircraft through a defined airspace. Each aircraft (110) has a starting and destination position relative to the airspace. A start state is based on the earliest start, and a goal state on the destination. The system connects start and goal states via a sequence of next states by projecting each state incrementally forward in time. Candidate next states include all possible next paths to a next position of each aircraft combined with next paths and positions of its neighbors, with unsafe next states culled from the set. Remaining next states are prioritized on the basis of aggregate system cost for all next paths and an estimated system cost to achieve the goal state, and an optimal next state is added to the sequence. When the goal state is achieved, optimal flight plans are generated for each aircraft.

## Description

### BACKGROUND

Air traffic control and airspace optimization has long been a manual process. Control tower operators would simultaneously manually verify that aircraft in their airspace will not approach too closely, avoid known hazards in their airspace, and ensure that their routes are flown as smoothly as possible. In recent years, the availability of air traffic controllers has been dwarfed by the demand for flights. This disparity is expected to widen with the further integration of autonomous vehicles into airspaces already transited by crewed vehicles. All these factors together have shown the need for much higher fidelity automation in the air traffic control space. Further, such higher-fidelity automation must take into account the diverse array of flight characteristics distributed among the crewed and uncrewed vehicles crossing tomorrow's skies.

### SUMMARY

In a first aspect, a ground-based motion planning system for routing a set of aircraft (e.g., including a variety of flight characteristics, and including both crewed and uncrewed aircraft) through an airspace is disclosed. In embodiments, the motion planning system includes a memory for storing encoded instructions and/or sets of aircraft and state information received or generated by the system and processors configurable via the encoded instructions. The motion planning system receives routing requests, or requests to route a set of aircraft through a defined airspace controlled by the system. For example, each aircraft to be routed has a starting position (e.g., or a position and orientation (pose) in three dimensions) associated with a departure time (e.g., at which the aircraft is expected to achieve the starting position) and flight plan information (e.g., including an initial flight path from the starting position to a destination position relative to the airspace (which may include a set of intermediate waypoints) and flight characteristics specific to the aircraft (e.g., aircraft performance parameters or tolerances, inflight maneuvers to achieve the initial flight path, airspeeds, altitudes). Based on the information for each aircraft to be routed, the motion planning system determines a starting state corresponding to the earliest starting position among all aircraft. Similarly, the motion planning system determines a goal state corresponding to the latest achievement by a routed aircraft of its destination position (e.g., a point at which every routed aircraft having left its starting position will have reached its destination). The motion planning system connects the starting state and goal state via a sequence of next states, each next state corresponding to an incremental projection of a current state (beginning with the starting state) forward in time (and the uniform incrementation of all aircraft flight paths from a current position/pose to a next position/pose via a next path. For each next state, the motion planning system generates a set of candidate next states, including all possible next positions and next paths available to a routed aircraft combined with all possible next positions and next paths available to any neighbor aircraft (e.g., any aircraft whose next path and/or next position comes within a threshold range of the routed aircraft). The motion planning system culls the set of candidate next states by removing any unsafe candidate next state, e.g., wherein a next path or next position of a routed aircraft intersects with or encroaches upon a concurrent next path or next position of another routed aircraft (e.g., or with another known hazard). From the culled set of remaining candidate next states, the motion planning system selects an optimal next state by prioritizing the remaining candidate next states on the basis of a) an aggregate system cost of each next path included within the candidate next state and b) an estimated system cost of reaching the goal state if the candidate next state were selected as the next state. The motion planning system adds the selected optimal next state to the sequence of next states and proceeds to the next iteration of candidate next states at the next incremental time. When the goal state is achieved, the motion planning system generates a flight plan for each routed aircraft including an optimal flight path from the aircraft's starting position to its destination position.

In some embodiments, known hazards that may warrant rerouting of an aircraft include other air traffic (e.g., not associated with the routing request), terrain, manmade obstacles, or natural obstacles. If a next position or next path intersects with or encroaches upon a known hazard (e.g., comes within a threshold (e.g., spherical) radius of the hazard), the aircraft may be rerouted.

In some embodiments, the routing request includes multiple tiers of aircraft, each tier having a different priority level. For example, the motion planning system may first route the highest priority tier of aircraft through the airspace, followed by successively lower priority tiers. For each tier having a given priority level, concurrent next paths and/or next positions of any previously routed higher priority aircraft may be treated as known hazards which the lower priority aircraft are to be routed around.

In some embodiments, the routing request includes teamed aircraft, e.g., a set of two or more aircraft flying in formation or otherwise defined by a spatial relationship within the team. For example, teamed aircraft may be routed or rerouted as a unit, or an optimal next state may temporarily break formation and redefine the spatial relationships within the team.

In some embodiments, a starting position or pose may indicate a position or pose at which an aircraft enters the airspace inflight.

In some embodiments, a starting position or pose may indicate a liftoff point from a runway or airport within the airspace.

In some embodiments, a destination position or pose may indicate a touchdown point at a runway within the airspace.

In some embodiments, a destination position may indicate a position/pose at which the aircraft exits the airspace inflight (e.g., is "handed off" to an adjacent airspace).

In some embodiments, flight characteristics of a routed aircraft include vertical maneuvers (e.g., climb/descend), lateral maneuvers (e.g., turn), altitude, and airspeed.

In some embodiments, flight characteristics of a routed aircraft include aircraft-specific risk tolerances and performance envelopes.

In a further aspect, a method for routing airborne vehicles through a defined airspace is also disclosed. In embodiments, the method includes receiving routing requests, or requests to route a set of aircraft through a defined airspace controlled by the system. For example, each aircraft to be routed has a starting position (e.g., or a position and orientation (pose) in three dimensions) associated with a departure time (e.g., at which the aircraft is expected to achieve the starting position) and flight plan information (e.g., including an initial flight path from the starting position to a destination position relative to the airspace (which may include a set of intermediate waypoints) and flight characteristics specific to the aircraft (e.g., aircraft performance parameters or tolerances, inflight maneuvers to achieve the initial flight path, airspeeds, altitudes). The method includes determining, based on the information for each routed aircraft, a starting state for the routing request corresponding to the earliest starting position among all aircraft. The method includes determining a goal state of the routing request corresponding to the latest achievement by a routed aircraft of its destination position (e.g., a point at which every routed aircraft having left its starting position will have reached its destination). The method includes connecting the starting state and goal state by determining a sequence of next states, each next state corresponding to an incremental projection of a current state (beginning with the starting state) forward in time (and the uniform incrementation of all aircraft flight paths from a current position/pose to a next position/pose via a next path. For each next state, the motion planning system generates a set of candidate next states, including all possible next positions and next paths available to a routed aircraft combined with all possible next positions and next paths available to any neighbor aircraft (e.g., any aircraft whose next path and/or next position comes within a threshold range of the routed aircraft). The method includes culling the set of candidate next states by removing any unsafe candidate next state, e.g., wherein a next path or next position of a routed aircraft intersects with or encroaches upon a concurrent next path or next position of another routed aircraft (e.g., or with another known hazard). The method includes selecting an optimal next state from the culled set of remaining candidate next states by prioritizing the remaining candidate next states on the basis of a) an aggregate system cost of each next path included within the candidate next state and b) an estimated system cost of reaching the goal state if the candidate next state were selected as the next state. The method includes adding the selected optimal next state to the sequence of next states and proceeding to the next iteration of candidate next states at the next incremental time. The method includes, when the goal state is achieved, generating a flight plan for each routed aircraft including an optimal flight path from the aircraft's starting position to its destination position.

In some embodiments, the method includes rerouting a next path or next position of an aircraft around known hazards such as other air traffic (e.g., not associated with the routing request), terrain, manmade obstacles, or natural obstacles. For example, if the next position or next path intersects with or encroaches upon a known hazard (e.g., comes within a threshold (e.g., spherical) radius of the hazard), the aircraft may be rerouted.

In some embodiments, the method includes receiving a routing request including multiple tiers of aircraft, each tier having a different priority level. For example, the method may include first routing the highest priority tier of aircraft through the airspace, followed by successively lower priority tiers. For each tier having a given priority level, concurrent next paths and/or next positions of any previously routed higher priority aircraft may be treated as known hazards which the lower priority aircraft are to be routed around.

In some embodiments, the method includes receiving a routing request including teamed aircraft, e.g., a set of two or more aircraft flying in formation or otherwise defined by a spatial relationship within the team. For example, teamed aircraft may be routed or rerouted as a unit, or an optimal next state may temporarily break formation and redefine the spatial relationships within the team.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram illustrating a motion planning system for routing airborne vehicles through an airspace, according to example embodiments of this disclosure;
FIG. 2 is a diagrammatic illustration of a routing request of the motion planning system of FIG. 1,
FIGS. 3A through 3D are diagrammatic illustrations of routing operations of the motion planning system of FIG. 1 in fulfillment of the routing request of FIG. 2;
FIGS. 4A and 4B is a diagrammatic illustration of additional routing operations of the motion planning system of FIG. 1; and
and FIGS. 5A and 5B are flow diagrams illustrating a method for routing a set of aircraft through an airspace, in accordance with example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Embodiments of the inventive concepts disclosed herein are directed to a system and method for routing a set of aircraft (which may include both crewed and uncrewed aircraft) through an airspace. In embodiments, the system and method may account for a set of dissimilar aircraft having a broad variety of flight characteristics (e.g., fixed-wing/vertical takeoff and landing (VTOL); high altitude/low altitude; commercial/military; high airspeed/low airspeed; high maneuverability/low maneuverability).

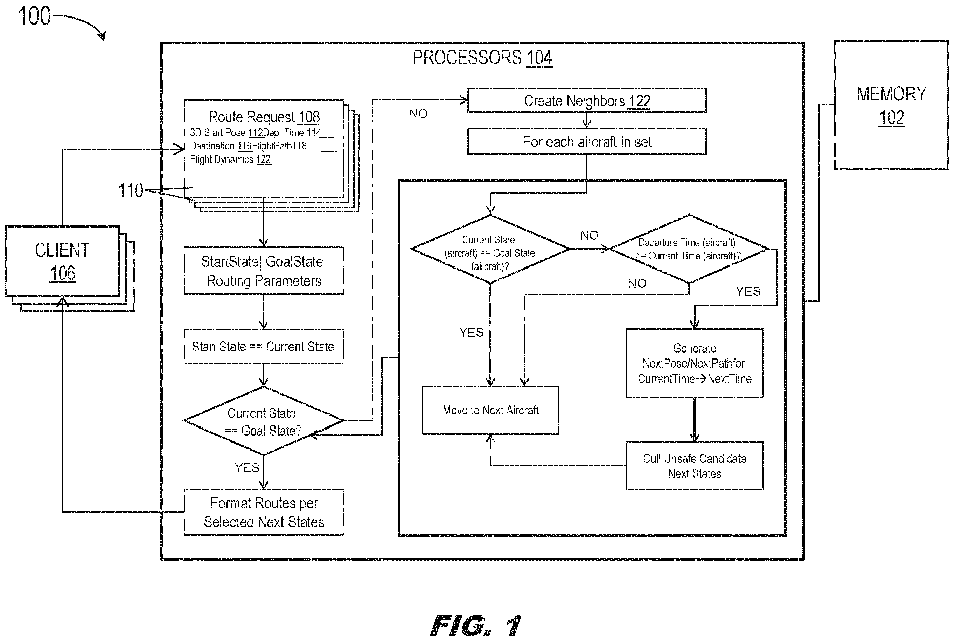

Referring to FIG. 1, a motion planning system 100 for routing sets of aircraft (e.g., crewed aircraft, commercial aircraft, military aircraft, uncrewed aircraft systems (UAS)) is shown. The motion planning system may include memory 102 and processors 104, the memory configured for storage of encoded instructions executable by the processors as well as aircraft and routing data generated by the processors 104.

In embodiments, the motion planning system 100 may be a ground-based system in communication with a variety of clients 106, each client charged with routing one or more sets of aircraft through a defined airspace wherein traffic is routed and controlled via the motion planning system. For example, the system 100 may receive routing requests 108 from a client 106, each routing request involving the routing of a set of aircraft 110 through the airspace. In embodiments, a client 106 may include, but is not limited to, a ground-based air traffic control (ATC) facility or a digital server controlling the routing of air traffic through the defined airspace.

In embodiments, for each aircraft 110 to be routed through the airspace, the routing request 108 may include one or more of the following: a starting position 112 (in some embodiments, a starting position and orientation (pose), e.g., in three dimensions (3D; e.g., latitude/longitude/altitude and pitch/roll/yaw relative to an origin)); a departure time 114 (a time at which the aircraft is expected to enter the airspace or begin its flight path, e.g., concurrent with the starting pose); a destination 116 (e.g., destination position, destination pose; a position/pose at which the aircraft leaves the airspace); a flight path 118 (e.g., a preferred path from the starting pose to the destination within the airspace; and flight dynamics 120 (information about the configuration and performance of the aircraft while transiting the airspace, e.g., cruising altitude, airspeed, turning radius, maneuverability, fuel capacity, glide performance, risk tolerance). For example, the aircraft 110 may be scheduled for takeoff from an airport or like facility within the airspace, e.g., wherein a starting pose 112 and/or departure time 114 corresponds to a liftoff of the aircraft from a particular runway of known orientation (e.g., a point at which the flight path 118 commences). Similarly, the aircraft 110 may be scheduled to land at an airport within the airspace, e.g., wherein a destination position 116 corresponds to a touchdown point on a particular runway of the airport (also of known orientation). In some embodiments, a starting pose 112 and destination 116 may respectively correspond to a point at which a given aircraft 110 enters or exits the airspace inflight (e.g., wherein traffic control for the aircraft is "handed over" between the system 100 and a like system tasked with traffic control through an adjacent airspace).

In embodiments, the system 100 may proceed to route the set of aircraft 110 through the airspace (e.g., via generating a set of routes, one route for each aircraft of the set and providing for that aircraft a safe, separated, and efficient flight path from its starting pose 112 to its destination 116) by defining a starting state, a goal state, and associated routing parameters. For example, the starting state (e.g., start state) may correspond to a departure time 114 wherein an aircraft 110 associated with the routing request 108 first enters the defined airspace (or, e.g., first lifts off from a runway within the airspace) before any other aircraft associated with the routing request has done so, and the goal state may correspond to a time wherein every aircraft associated with the routing request has left its starting pose and has reached its destination. Further, the start state may comprise a state of each aircraft 110 at the departure time 114 (comprising, e.g., a pose of the aircraft, an airspeed of the aircraft, a heading of the aircraft, a fuel capacity/effective range of the aircraft, and/or a configuration of the aircraft). Similarly, the goal state may comprise the state of each aircraft 110, according to the same parameters as define the start state, at the time when conditions defining the goal state are fulfilled (e.g., all aircraft have reached their destinations relative to the airspace). In embodiments, associated routing parameters may define a level of lateral (e.g., horizontal) and/or vertical separation to be provided for each routed aircraft 110, maximum or minimum airspeeds to be observed within the airspace, weather or atmospheric conditions within the airspace that may affect aircraft performance or present hazards to air traffic, and/or any other known manmade or natural obstructions or hazards within the airspace.

In embodiments, given a start state, the set of aircraft 110, and associated routing parameters, the system 100 may proceed from the start state toward the goal state in the time domain through a sequence of intermediate current states, each current state corresponding to a time increment between an initial time ***t₀*** corresponding to the start state and a goal time ***t_{g}*** corresponding to the goal state (e.g., a time at which the goal state is achieved). For example, the system 100 may achieve the goal state by individually routing each aircraft 110 from its starting pose 112 to its destination 116 while accounting for any hazards or neighbors (e.g., other aircraft 110 of the set, other air traffic, other natural/manmade obstacles) that aircraft may encounter along its flight path 118. In embodiments, the flight path 118 of one or more aircraft 110 may be optimized in order to achieve goal state conditions whereby, e.g., fuel use is minimized, required separation is maintained, and/or any other desired flight parameters are observed or satisfied. For example, the system 100 may set the first current state to the start state (e.g., at an initial time ***t₀***) and, while the current state is determined not to be the goal state (e.g., while the conditions defining the goal state have not yet been fulfilled), project the set of aircraft 110 in a synchronized fashion forward in the time domain, such that each ***n***^{th} current state comprises a set of poses of each aircraft (and the associated flight dynamics of each aircraft) at an incremental time ***tₙ*** wherein ***t₀*** ≥ ***tₙ*** ≤ ***t_{g}**.*

In embodiments, for each ***n***^{th} current state, the system 100 may create, for each aircraft 110 of the set, a set of neighbors 122, or any other aircraft of the set that may affect the safety of the instant aircraft at, or en route to, the next state (e.g., the ***(n+1)***^{th} state immediately following the current state and comprising a pose of each aircraft at the next incremental time ***t*_{*n*+*1*}**). For example, any aircraft 110 whose pose is within a predetermined range of, or whose flight path 118 comes within a predetermined range of, a flight path (e.g., next path) connecting the current-state and next-state poses of the instant aircraft may be considered a neighbor of the instant aircraft.

In embodiments, for each instant aircraft 110 of the set, the system 100 may first determine whether the instant aircraft has reached its individual goal state, e.g., its destination 116. If, for example, the instant aircraft 110 has reached its destination 116, no further routing of the instant aircraft may be required and the system 100 may proceed to the next aircraft of the set. If, however, the instant aircraft 110 has not yet reached its destination 116, the system 100 may determine whether the departure time 114 of the instant aircraft has elapsed, e.g., whether the instant aircraft has yet entered the airspace. If, for example, the departure time 114 of the instant aircraft 110 does not fall between the current incremental time ***tₙ*** and the next incremental time ***t*_{*n*+*1*}**, the system 100 may also proceed to the next aircraft, as the instant aircraft has not yet entered the airspace and likewise no routing is necessary yet.

In embodiments, if the instant aircraft 100 has entered the airspace but has not yet reached its destination, the instant aircraft will be routed by the system 100, e.g., projected forward in the time domain from the current state at incremental time ***tₙ*** to the next state at incremental time ***t*_{*n*+*1*}** along its flight path 118. For example, the system 100 may consider, based on the known flight dynamics 120 and current pose of the instant aircraft 110 at the last (e.g., ***n***^{th}) current state, all possible next poses of the instant aircraft, each next pose based on a combination of the flight dynamics of the instant aircraft and any neighbors 122 or hazards proximate to the instant aircraft.

In embodiments, for each ***n***^{th} current state, the system 100 may generate a set of candidate next states from which the optimal (***n*+*1***)^{th} next state may be selected. For example, each candidate next state may comprise an ***x*** * ***y*** combination of all next poses ***x*** of the set of all possible next poses, and associated next paths from the current pose to each next pose, based on a current pose of the instant aircraft 110 and all possible flight dynamics applied to said current pose in the time domain (e.g., turn left, turn right, level flight, climb, descent, increase/decrease airspeed), and all possible next poses y (and associated next paths to each next pose) of each neighbor of the instant aircraft (e.g., also based on the current pose of each neighbor and all possible flight dynamics applied to the current pose in the time domain).

In embodiments, the system 100 may cull the set of candidate next states by removing any candidate next state wherein either the instant aircraft 110 or any of its neighbors 122 are endangered. For example, if a next pose or next path of the instant aircraft 110 intersects with, or encroaches upon (e.g., within predetermined separation limits), a next pose or next path of any neighbors of the instant aircraft (e.g., such that an encroachment or collision may be imminent), that candidate next state may be culled from the set of candidate next states. Similarly, if any next pose or next path within the candidate next state intersects with or encroaches upon known hazards, e.g., terrain, other aircraft or air traffic not associated with the routing request 108, or manmade/natural obstacles, the system 100 may remove the candidate next state from consideration

In embodiments, the system 100 may select an optimal candidate next state by prioritizing the culled set of remaining candidate next states, e.g., those candidate next states not removed as unsafe. For example, where each candidate next state comprises a next pose of every aircraft 110 associated with the routing request 108 (e.g., and not otherwise having reached its destination 116 or having not yet reached its departure time 114) and a next path via which each aircraft travels from its current pose to the next pose during the time increment from ***tₙ*** to ***t*_{*n*+*1*}**, the system 100 may determine, for each candidate next state, a cumulative system cost, e.g., *g(n),* based on a system cost for each next path (e.g., a system cost for each aircraft 110 to reach its next pose). Further, the system 100 may determine for each candidate next state a heuristic, e.g., *h(n),* an estimated system cost of reaching the goal state of the routing request 108 from the candidate next state.

In embodiments, the system 100 may select an optimal candidate next state as the (***n*+*1***)^{th} next state, adding the selected next state to the sequence of current states (e.g., stored to memory 102) and proceeding to the (***n*+*2***)^{th} next state. For example, the system 100 may prioritize the set of candidate next states based on the cumulative system cost ***g(n)*** and heuristic, e.g., ***h(n)*** for each candidate next state, selecting as the next state the candidate next state that minimizes either ***g(n)*** or ***h(n).*** In some embodiments, the system 100 may select an optimal next state according to A-Star (A*) algorithms, e.g., based on a minimal combination of ***g(n)*** and ***h(n)*** (e.g., based on a minimal ***f(n)***, wherein ***f(n)*** = ***g(n)* + *h(n)*** or wherein ***f(n)*** is a weighted combination of ***g(n)*** and ***h(n)**.*

In embodiments, when the goal state of the routing request 108 has been achieved, the system 100 may fulfill the routing request by generating flight plans 110 for each associated aircraft based on the completed sequence of states (e.g., comprising the start state and goal state of the routing request, and the full set of incremental current/next states connecting the start and goal states), and forwarding the generated flight plans to the requesting client 106. For example, each flight plan may route an aircraft 100 associated with the routing request 108 from its starting pose 112 to its destination 116 according to the set of incremental next poses and next paths included in the sequence of states (which may deviate at points from the original flight path 118).

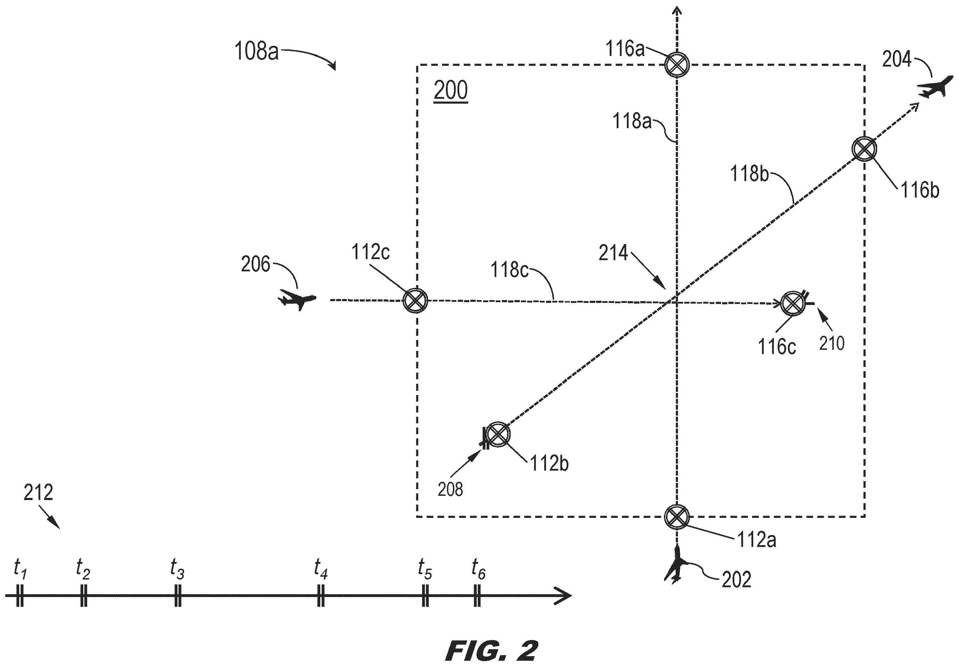

Referring now to FIG. 2, the routing request 108a may be implemented and may function similarly to the routing request 108 of FIG. 1, except that the routing request 108a may be received by the system (100, FIG. 1) configured for control of air traffic through the airspace 200. For example, the airspace 200 (represented in FIG. 2 by a two-dimensional (2D) diagram) may be a 3D volume extending above a defined surface area to a predetermined altitude (a maximum cruising altitude for any aircraft cleared for travel through the airspace 200, e.g., FL 400). Similarly, the aircraft 202, 204, 206 may be implemented and may function similarly to the aircraft 110 of FIG. 1, except that the routing request 108a may concern the routing of aircraft 202, 204, 206 through the airspace 200.

In embodiments, the aircraft 202 may be associated with a flight path 118a from a starting pose 112a (e.g., where the aircraft 202 enters the airspace 200 inflight at a departure time ***t₁***) to a destination 116a (e.g., where the aircraft exits the airspace inflight at an arrival time ***t₄***). Similarly, the aircraft 204 may be associated with a flight path 118b from a starting pose 112b (e.g., where the aircraft 204 takes off from the airport 208 located within the airspace 200 at a departure time ***t₂***) to a destination 116b (e.g., where the aircraft 204 exits the airspace inflight at an arrival time ***t₆***). Further, the aircraft 206 may be associated with a flight path 118c from a starting pose 112c enters the airspace 200 inflight at a departure time ***t₃***) to a destination 116c (e.g., where the aircraft 206 touches down at an airport 210 within the airspace 200 at an arrival time ***t₅***). In embodiments, the approximate departure and arrival times ***t₁*** through ***t₆*** may also be shown relative to the time axis 212 (e.g., in the time domain). It may be observed that the flight plans 118a, 118b, 118c appear to intersect (214); however, the two-dimensional representation of the airspace 200 may not account for the relative altitudes, or the diverse flight dynamics, of the aircraft 202, 204, 206 and thus may not accurately show whether the flight plans provided by the routing request 108 may result in an imminent incursion or collision of one or more aircraft.

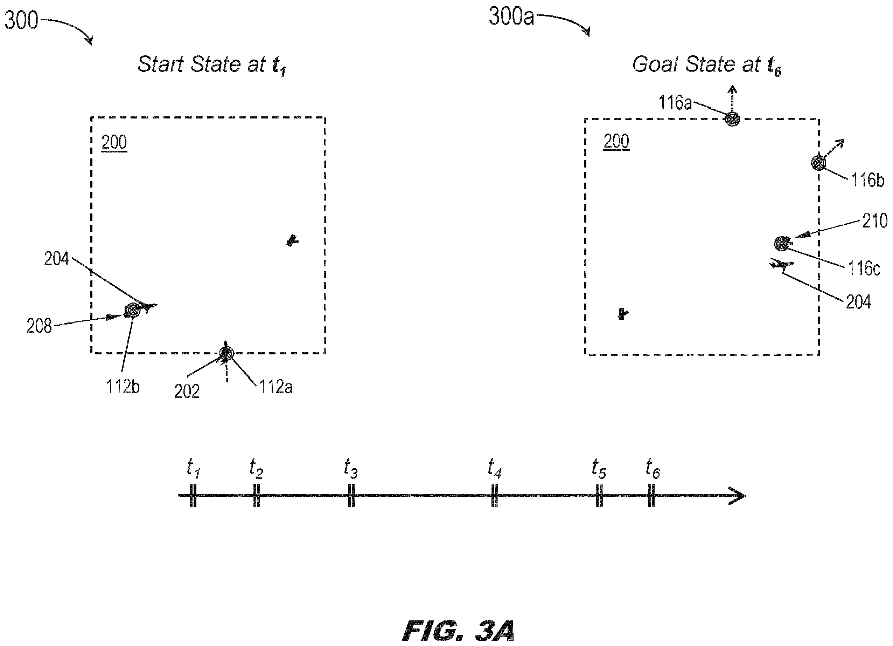

Referring now to FIG. 3A, the airspace state 300, 300a may represent a condition of the airspace 200 at, respectively, a start state 300 and goal state 300a of the routing request (108a, FIG. 2) as determined by the system 100. For example, the system 100 may determine the start state 300 of the routing request 108a as corresponding to the earliest departure time (114, FIG. 1) of all aircraft 202, 204, 206 associated with the routing request, e.g., the departure time ***t₁***, of the inflight arrival (e.g., at starting pose 112a) of the aircraft 202 within the airspace 200. Further, the start state 300 may also indicate the starting pose 112b of the aircraft 204, e.g., on the ground at the airport 208. Similarly, the goal state 300a may be associated with the latest achievement of a destination position (116, FIG. 1) by all aircraft 202, 204, 206, e.g., the time ***t₆*** at which the aircraft 204 exits the airspace 200 inflight at the destination 116b. Further, the goal state 300b may also indicate the destinations 116a, 116c at which, respectively, the aircraft 202 exited the airspace 200 inflight and the aircraft 206 landed at the airport 210.

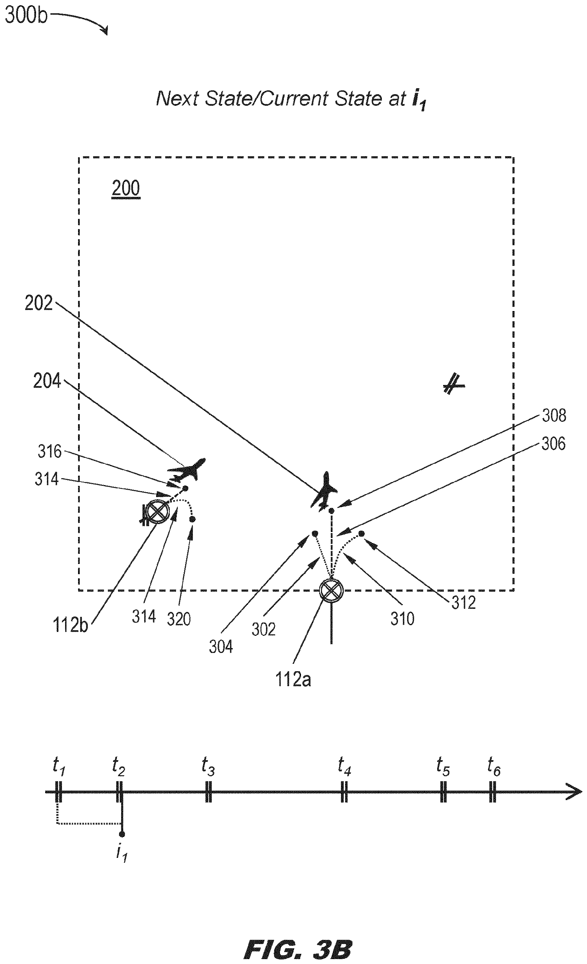

Referring also to FIG. 3B, the airspace state 300b may be implemented and may function similarly to the start state 300 of FIG. 3A, except that the current state 300b may be generated by the system 100 by projecting the start state 300 forward in the time domain (e.g., by a fixed time interval) to an incremental time ***i₁**,* e.g., wherein the start state 300 is a current state (e.g., at time ***t₁***) and the airspace state 300b is the next state in the sequence of states. In embodiments, the system 100 may generate each next state 300b by projecting forward in time (e.g., from time ***t₁*** to time ***i₁***) each aircraft 202, 204, 206 associated with the routing request 108a. For example, the system may generate a set of candidate next states, from which an optimal next state is selected as the current state at the incremental time ***i₁**.* Each candidate next state represents a set of possible next poses of each aircraft 202, 204, 206 at time ***i₁**,* based on the last current pose of each aircraft (e.g., at time ***t₁***) and a next path via which the aircraft reaches the next pose from the current pose. In embodiments, the determination of all possible next poses and next paths for a given aircraft 202, 204, 206 may be based on the flight dynamics (120, FIG. 1) of each aircraft, available information about wind or atmospheric conditions where the aircraft is or will be during the time window in question, and the behavior of any neighbors (122, FIG. 1) of the given aircraft. For example, the aircraft 202 (at starting pose 112a as of time ***t₁***) may be projected forward along a possible next path 302 (e.g., representing a descent) to next pose 304, along a possible next path 306 (e.g., representing level flight) to next pose 308, and along a possible next path 310 (e.g., representing a right turn) to next pose 312. Similarly, the neighbor aircraft 204, having at time ***i₁*** just taken off from the airport 208 (e.g., starting pose 112b), may be projected forward along possible next path 314 (e.g., representing a continued initial climb) to next pose 316 or along possible next path 318 (e.g., representing a right turn, perhaps indicative of an emergency landing) to next pose 320. It may be observed that the possible next paths and next poses via which a particular aircraft 202, 204 is projected by the system 100 may also be at least partially dependent on the current flight segment of the respective flight paths (118a-118b, FIG. 2; e.g., level flight at cruising altitude vs. takeoff/initial climb).

In embodiments, given a routing request 108a wherein two aircraft 202, 204 are within the airspace 200 from time ***t₁*** to time ***i₁***, and assuming the system 100 projects the aircraft 202 through ***x*** next path-next pose combinations and the aircraft 204 through y next path-next pose combinations, the system may generate (e.g., and store to memory 102, FIG, 1) a set of ***xy*** candidate next states from which the next state 300b at incremental time ***t₁*** is selected (subject to culling of unsafe states, as described below). For example, given the set of ***xy*** candidate next states, and given that no unsafe states are culled by the system 100 at this point due to the distance between the aircraft 202, 204, the system may algorithmically prioritize the set of candidate next states.

In some embodiments, the system 100 may prioritize the set of candidate next states, and select a next state 300b for incremental time ***i₁**,* based on a combination of cumulative system cost (e.g., ***g(n)***) associated with the component next poses and next paths of each candidate next state and an estimated system cost (e.g., heuristic ***h(n)***) of reaching the goal state 300a from the next state 300b at incremental time ***i₁**,* assuming a given candidate next state is selected as the next state. For example, the next path 306 of the aircraft 202 (to next pose 208) and the next path 314 of the aircraft 204 (to next pose 316) may be associated with relatively low system costs, as these next paths align closely with the current or desired flight plans 118a, 118b of each aircraft. By contrast, if the aircraft 204 were to follow the next path 318 to next pose 320, the system cost may be relatively high as such a maneuver executed in an initial-climb phase would be both highly irregular and indicative of a potential emergency, e.g., an emergency landing at the airport 208 which, depending upon the altitude of the aircraft 204, may or may not succeed. Similarly, as the candidate next state associated with the next paths 306, 314 and next poses 308, 316 may most closely align with the flight plans 118a, 118b of the aircraft 202, 204, the estimated system cost/heuristic associated with this candidate next state may be low relative to other candidate next states in the set.

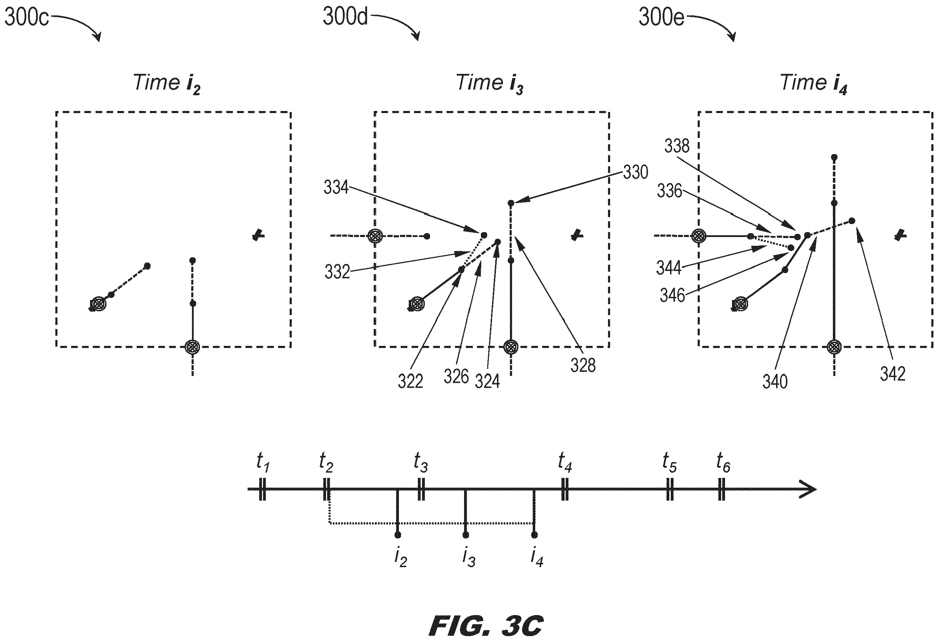

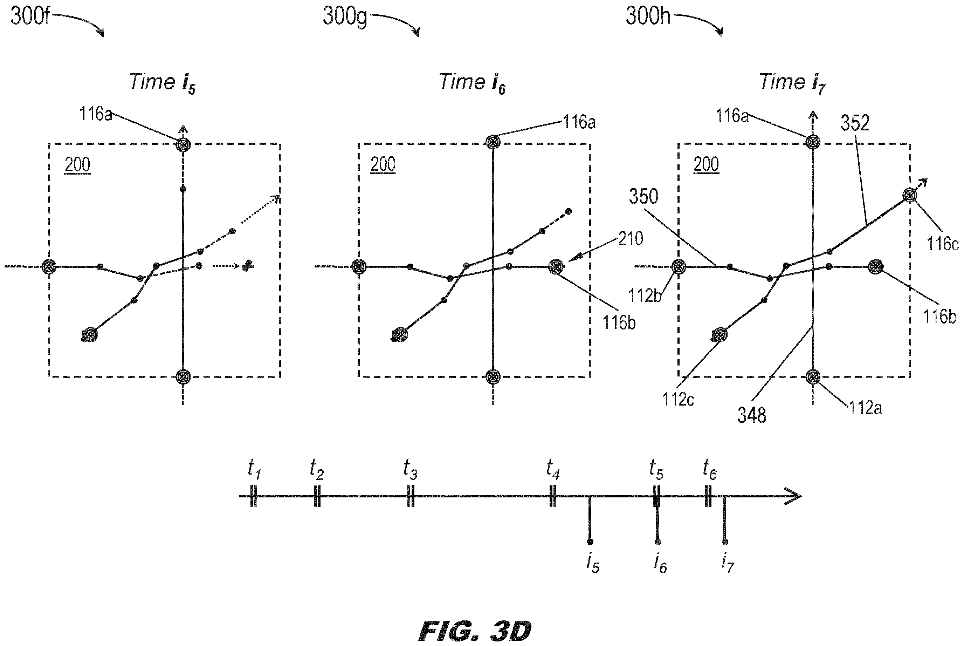

Referring also to FIGS. 3C and 3D, the next states 300c-300h may be implemented or may function similarly to the next state 300b of FIG. 3B, except that the next states 300c-300h may be candidate next states generated by the system 100 and selected as optimal next states for the incremental times ***i₂*** through ***i₇**.* In embodiments, the system 100 may select each optimal next state 300c-300h by setting the last selected next state as the current state of the airspace 200, and projecting that current state forward in the time domain to the next incremental time as shown above in FIG. 2B).

In some embodiments, a next state 300d may modify the flight plan 118b of an aircraft 204. For example, the system 100 may project the aircraft 204 (at next pose 322 as of time ***i₂***) to a next pose 324 at time ***i₃***, e.g., via next path 326. However, the next path 326 and/or next pose 324 may present an encroachment upon, or an imminent collision with, the projected next path 328 of the aircraft 202 during the same time increment. For example, the aircraft 204 may be climbing to, or flying level at, a cruising altitude while the aircraft 202 continues level flight at cruising altitude, such that the separation envelopes of the two aircraft may intersect beyond threshold levels. In some embodiments, the system 100 may cull as unsafe any candidate next states including the combination of next paths 326 and 328. For example, the system 100 may select instead as the next state 300d at time ***i₃*** a candidate next state projecting the aircraft 202 along the next path 328 (e.g., to a next pose 330) and projecting the aircraft 204 along the next path 332 to a next pose 334, thereby maintaining safe separation between the two aircraft. Similarly, in selecting the optimal next state 300e, the system 100 may cull any candidate next states projecting the aircraft 206 along the next path 336 to the next pose 338, which may encroach upon the next path 340 and next pose 342 of the aircraft 206, in favor of the next path 344 and next pose 346.

Referring in particular to FIG. 3D, in selecting the next state 300f at time ***i₅**,* the system 100 may route the aircraft 202 to (and through) the destination 116a, via which the aircraft leaves the airspace 200. For example, the aircraft 202 may be handed off to a like system controlling air traffic through an adjacent airspace. It may be observed that, when an aircraft 202, 204, 206 has been routed away from its initial flight plan (118a-118c, FIG. 2) by the system 100, e.g., via the culling of unsafe candidate next states in the selection of next states 300d, 300e, the system 100 may select next states that minimize diversion of the aircraft from their initial flight plans and select subsequent next states consistent with realigning the aircraft to their initial flight plans. Similarly, in selecting the next state 300g at time ***i₆***, the system 100 may note the landing of the aircraft 204 at the airport 210, and this the arrival of the aircraft 204 at its destination 116b. As the aircraft 202 and 204 have both reached their destinations 116a, 116b, the system 100 may not route these aircraft further.

In embodiments, in selecting the optimal next state 300h at time ***i₇***, the system 100 may determine that the aircraft 206 has also reached its destination 116c and exited the airspace 200 inflight. Accordingly, as each aircraft 202, 204, 206 has been routed to its destination, the system 100 may determine that the goal state (300a, FIG. 3A) has been achieved. Further, the system 100 may, having connected the start state 300 and goal state 300a via a sequence of incremental optimal next steps 300b-300h, may generate optimized flight plans 348, 350, 352 respectively for each aircraft 202, 204, 206. For example, each aircraft 202, 204, 206 may be individually routed along an optimized flight plan 348, 350, 352 from its starting pose 112a-112c to its destination 116a-116c based on the sequence of incremental next poses and next paths selected for that aircraft to minimize system cost throughout the airspace 200, provide real-time safe deconfliction and separation among the aircraft, and allow for the dissimilar flight characteristics of each individual aircraft.

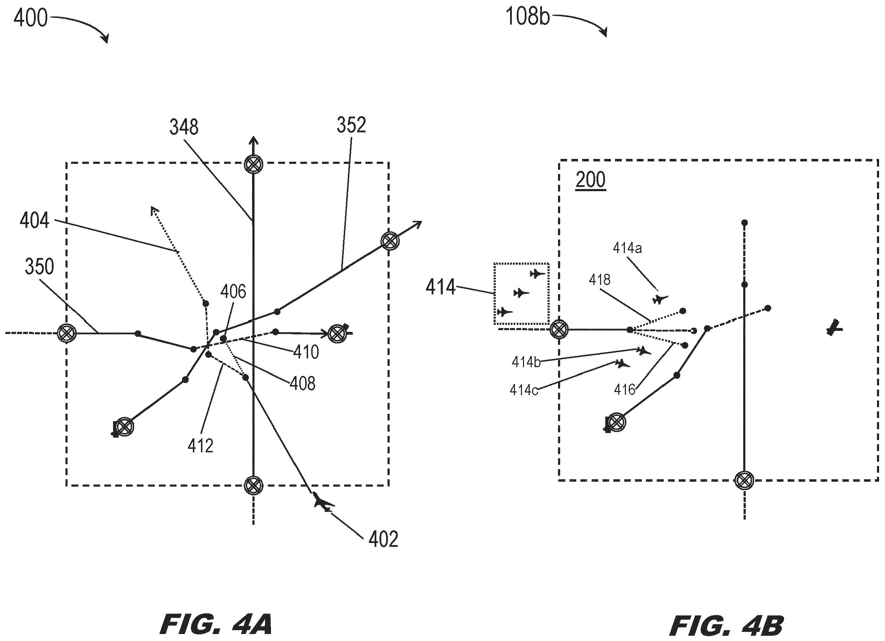

Referring now to FIG. 4A, the airspace 400 may be implemented and may function similarly to the airspace 300f (e.g., the next state of the airspace 200 at incremental time ***i₅**,* as shown by FIG. 3D) of optimized flight plans 348, 350, 352 in fulfillment of the routing request (108a, FIG. 2) is shown.

In some embodiments, the system (100, FIG. 1) may prioritize the routing of a set of aircraft according to a routing request 108, 108a into two or more tiers. For example, the routing request 108a may assign the aircraft (202, 204, 206; FIG. 2) a high priority but include a lower priority tier to which aircraft 402 and initial flight plan 404have been assigned. For example, after routing the high priority aircraft 202, 204, 206 through the airspace 200 as shown by FIGS. 3A through 3D, the system 100 may additionally route the lower priority tier including aircraft 402 through the airspace 400 in alignment with its initial flight plan 404 to the extent possible (e.g., thereby minimizing system cost). However, the system 100 may, in the routing of the aircraft 402, consider the previously optimized flight plans 348, 350, 352 of the higher priority aircraft 202, 204, 206 as concurrent hazards, such that if a next pose 406 or next path 408 of the lower priority aircraft 402 and/or its initial flight plan 404 concurrently encroaches upon any segment 410 of a previously optimized flight plan 350 (e.g., between incremental times ***i₄*** and ***i₅***) the lower priority aircraft 402 may be rerouted (412) away from the initial flight plan to prevent encroachment by the aircraft 402 and preserve higher priority optimized flight plans. In some embodiments, the motion planning system 100 may first route one or more higher-priority tiers of crewed aircraft (e.g., military, commercial, civil) through the airspace, followed by one or more lower-priority tiers of uncrewed aircraft systems (UAS). In some embodiments, the routing request 108, 108a may include ***N*** multiple tiers having multiple priority levels (e.g., where ***N*** is an integer), such that each ***M***th set of aircraft (e.g., where ***M*** is an integer and ***M*** ≤ ***N***) having a priority level ***P*** may similarly be rerouted to avoid encroachment upon any flight plans previously optimized for aircraft, or sets of aircraft, having a priority level higher than ***P*.**

Referring now to FIG. 4B, in some embodiments, the routing request 108b may be implemented and may function similarly to the routing requests 108, 108a, except that the routing request 108b may additionally or alternatively provide for the routing of an aircraft team 414. For example, an aircraft team 414 may comprise a set of two or more teamed aircraft 414a-414c defined by a fixed or dynamic spatial relationship between each individual aircraft within the team (e.g., flying in formation). In embodiments, the system 100 may route an aircraft team 414 similarly to any other individual aircraft 202, 204, 206, 402, , except that the selection of optimal next states may additionally consider the system cost or safety ramifications of maintaining a fixed spatial relationship within the aircraft team (e.g., rerouting the aircraft team 414 along the next path 416) vs. altering the spatial relationship (e.g., temporarily breaking formation by rerouting the teamed aircraft 414a along the next path 418 and the teamed aircraft 414b, 414c along the next path 416).

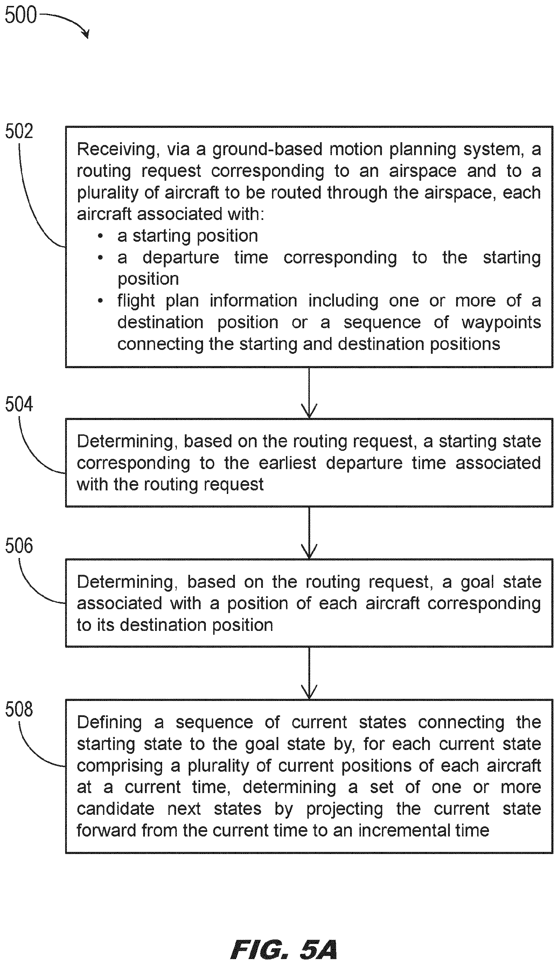

Referring to FIG. 5A, the method 500 may be implemented by the motion planning system 100 and may include the following steps.

At a step 502, the motion planning system receives a routing request to route a set of aircraft through a defined airspace. For example, each aircraft may have a starting position and a destination position relative to the defined airspace, a departure time corresponding to the starting position, and an initial flight plan, e.g., a sequence of waypoints defining a path from the starting position to the destination position. Further, the starting position may indicate a position whereby an aircraft enters the airspace inflight, or commences a flight path by lifting off from a runway or airport located within the airspace. Similarly, the destination position may indicate a position whereby an aircraft exits the airspace inflight (e.g., to be "handed off" to a motion planning system controlling an adjacent airspace) or terminates a flight path by touching down at a runway or airport within the airspace. In some embodiments, the starting and destination positions are three-dimensional poses, e.g., a position and orientation of the aircraft in three dimensions (e.g., six degrees of freedom (6DoF); latitude/longitude/altitude, pitch/roll/yaw relative to a default or origin orientation).

At a step 504, the motion planning system determines a starting state relative to the routing request. For example, if the routing request includes a set of aircraft, each aircraft to be routed from the starting position to the destination position within the airspace, the starting state may be set to the earliest starting position, or the earliest departure time, among all aircraft included in the routing request and may indicate a position or pose of each aircraft (and may include additional status information about each aircraft) at the time of the starting state.

At a step 506, the motion planning system determines a goal state of the routing request. For example, the goal state may be achieved when every aircraft included in the routing request has reached its destination position, e.g., at or after the point when the final aircraft achieves its destination position.

At a step 508, the motion planning system defines a sequence of intermediate states (e.g., current states, next states) linking the starting state to the goal state by setting the starting state as a first current state and projecting each current state forward in time (e.g., by an incremental time) to a set of possible candidate next states until the goal state is achieved. For example, each candidate next state based on a current state may indicate a next position (next pose) and status of each routed aircraft at the corresponding incremental time of the next state, and a next path via which the aircraft can reach the next pose from its current position or pose. Further, each candidate next state may indicate every possible next position and next path available to each aircraft (e.g., based on all possible flight characteristics of the aircraft at the time of the last current state) combined with all possible next positions and next paths of each neighbor aircraft (e.g., any second aircraft associated with the routing request having a next position or next path coming within a threshold range of a first aircraft may be determined to be a neighbor of the first aircraft).

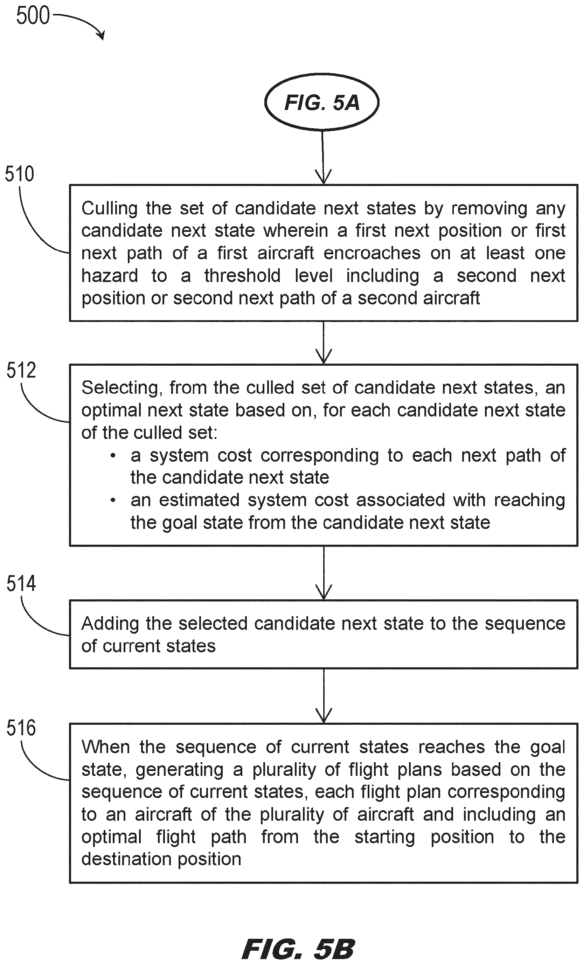

Referring also to FIG. 5B, at a step 510 the motion planning system culls the set of candidate next states by removing from the set of candidate next states any candidate next state wherein an unsafe condition exists. For example, any candidate next state wherein the next path or next position of a routed aircraft is in danger of collision with, or comes within a threshold range of, a concurrent next path or next position of another routed aircraft, may be removed as an unsafe candidate next state. Similarly, any candidate next state wherein a next path or next position of a routed aircraft intersects with, or comes within a threshold range of, other known hazards may also be removed as unsafe. Other hazards may include terrain, natural or manmade obstacles, or other air traffic not associated with the routing request.

At a step 512, the motion planning system selects an optimal next state from the culled set of remaining next states. For example, the motion planning system may determine, for each remaining candidate next state, an aggregate system cost of the set of next paths defining the candidate next state (e.g., the next path via which each aircraft reaches a next position from its last current position). Further, the motion planning system may estimate a system cost of reaching the goal state from the candidate next state. The optimal next state may be selected by prioritizing the candidate next states on the basis of these aggregate and estimated system costs (e.g., via a combination, weighted or unweighted, of the two) and selecting the candidate next state associated with the lowest overall combined system cost.

At a step 512, the motion planning system adds the selected optimal next state to the sequence of next states connecting the starting state and goal state, and increments the time window to the next iteration of candidate next states based on setting the most recently added next state to the current state.

At a step 514, when the conditions defining the goal state are achieved (e.g., every aircraft associated with the routing request has reached its destination position), the motion planning system generates flight plans for each aircraft associated with the routing request. For example, each flight plan is based on the starting and destination positions of a given aircraft relative to the airspace and includes the selected optimal set of next positions or poses between the starting and goal states, as well as the optimal next path for reaching each next position in sequence.

Embodiments of the inventive concepts disclosed herein provides innovative solutions to the complex problem of integrating uncrewed aircraft into a complex system space already congested by commercial and civil air traffic. Both crewed and uncrewed air traffic may be seamlessly blended regardless of the broad variety of individual performance envelopes, airspeeds, maneuverabilities, and/or risk tolerances of each aircraft, routing all aircraft simultaneously and removing prior limitations of implied priority and/or cost preference associated with conventional solutions (e.g., where some aircraft may be forced to take more drastic actions by virtue of being considered later in an algorithm or routing system). Further, rather than conventional routing of individual aircraft against a static environment, the motion planning system computes the safety of each aircraft at each state, culling any state where two aircraft may coterminously intersect or encroach in 3D space and reducing system complexity to a single request rather than a series of iterative requests. Further still, the motion planning system is applicable for more efficient aircraft teaming activities and to other military operations.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system (100) for routing a set of airborne vehicles through an airspace, the system comprising:
a memory (102) for storage of processor-executable encoded instructions;
and
one or more processors (104) coupled to the memory, the one or more processors configurable by the encoded instructions to:
receive a routing request (108) corresponding to an airspace and to a plurality of aircraft (110) to be routed through the airspace, each aircraft associated with:
a starting position (112);
a departure time (114) associated with the starting position;
and
flight plan information including one or more of a destination position (116) or a sequence of waypoints connecting the starting position to the destination position;
determine a starting state corresponding to the earliest departure time associated with the routing request, the starting state associated with a position of each of the plurality of aircraft at the earliest departure time;
determine a goal state goal state associated with a position of each of the plurality of aircraft corresponding to the destination position of the aircraft;
define a sequence of current states connecting the starting state to the goal state by, for each current state comprising a plurality of a current position of each aircraft at a current time, determining a set of one or more candidate next states by projecting the current state forward from the current time to an incremental time,
each candidate next state including, for each aircraft having departed from its starting position and not having reached its destination position, a plurality of possible next positions corresponding to the incremental time, each next position connected to the current position by a next path and one or more flight characteristics for reaching the next position;
cull the set of candidate next states by removing any candidate next state wherein a first next position or first next path of a first aircraft of the plurality of aircraft encroaches on at least one hazard to a threshold level, the at least one hazard including at least one of a second next position or a second next path associated with another aircraft of the plurality of aircraft, the second next position or second next path concurrent with the first next position or first next path;
select, from the culled set of candidate next states, an optimal next state based on, for each candidate next state of the culled set:
a system cost corresponding to each next path of the candidate next state;
and
an estimated system cost associated with reaching the goal state from the candidate next state;
add the selected candidate next state to the sequence of current states;
and
when the sequence of current states reaches the goal state, generate a plurality of flight plans based on the sequence of current states, each flight plan corresponding to an aircraft of the plurality of aircraft and including an optimal flight path from the starting position to the destination position.

2. The system of Claim 1, wherein:
the at least one hazard is associated with one or more of an aircraft not associated with the plurality of aircraft (110), a manmade obstacle, or a natural obstacle;
and
wherein the threshold level corresponds to a radius relative to at least one of the first next position or the first next path.

3. The system of Claim 1 or 2, wherein:
the routing request (108) includes ***M*** pluralities of aircraft, wherein ***M*** is an integer, each plurality of aircraft corresponding to a priority level;
and
wherein the one or more processors (104) are configured to:
generate ***M*** pluralities of flight plans, each ***N***th plurality of flight plans corresponding to an ***N***th plurality of aircraft and to a priority level ***P*** of the ***N***th plurality, wherein ***N*** is an integer and ***N*** ≤ ***M***;
and
wherein for the ***N***th plurality of flight plans, the at least one hazard includes each plurality of flight plans corresponding to a priority level greater than ***P.***

4. The system of Claim 1, 2 or 3, wherein the routing request (108) includes at least one aircraft team for routing through the airspace, each aircraft team comprising:
a plurality of team aircraft;
and
at least one relationship between at least two team aircraft of the plurality of team aircraft.

5. The system of any preceding Claim, wherein at least one starting position (112) of the routing request (108) corresponds to an inflight arrival of the associated aircraft within the airspace.

6. The system of any of Claims 1 to 4, wherein at least one starting position (112) of the routing request (108) corresponds to a takeoff of the associated aircraft within the airspace.

7. The system of any preceding Claim, wherein at least one destination position (116) of the routing request (108) corresponds to an inflight departure of the associated aircraft within the airspace.

8. The system of any of Claims 1 to 6, wherein at least one destination position (116) of the routing request (108) corresponds to a landing of the associated aircraft within the airspace.

9. The system of any preceding Claim, wherein the one or more flight characteristics include at least one of:
a lateral maneuver of the associated aircraft;
a vertical maneuver of the associated aircraft;
or
an airspeed of the associated aircraft.

10. The system of any preceding Claim, wherein the one or more flight characteristics include at least one of:
a risk tolerance of the associated aircraft;
or
a performance envelope of the associated aircraft.

11. A method for routing airborne vehicles through an airspace, the method comprising:
receiving, via a ground-based motion planning system, a routing request corresponding to an airspace and to a plurality of aircraft to be routed through the airspace, each aircraft associated with:
a starting position;
a departure time corresponding to the starting position;
and
flight plan information including one or more of a destination position or a sequence of waypoints connecting the starting position to the destination position;
determining, based on the routing request, a starting state corresponding to the earliest departure time associated with the routing request, the starting state associated with a position of each of the plurality of aircraft at the earliest departure time;
determining, based on the routing request, a goal state associated with a position of each of the plurality of aircraft corresponding to its destination position;
defining a sequence of current states connecting the starting state to the goal state by, for each current state comprising a plurality of current positions of each aircraft at a current time, determining a set of one or more candidate next states by projecting the current state forward from the current time to an incremental time, each candidate next state including, for each aircraft having departed from its starting position but not having reached its destination position, a plurality of possible next position corresponding to the incremental time, each next position connected to the current position by a next path and one or more flight characteristics for reaching the next position;
culling the set of candidate next states by removing any candidate next state wherein a first next position or first next path of a first aircraft of the plurality of aircraft encroaches on at least one hazard to a threshold level the at least one hazard including at least one of a second next position or a second next path associated with a second aircraft of the plurality of aircraft, the second next position or second next path concurrent with the first next position or first next path;
selecting, from the culled set of candidate next states, an optimal next state based on, for each candidate next state of the culled set:
a system cost corresponding to each next path of the candidate next state;
and
an estimated system cost associated with reaching the goal state from the candidate next state;
adding the selected candidate next state to the sequence of current states;
and
when the sequence of current states reaches the goal state, generating a plurality of flight plans based on the sequence of current states, each flight plan corresponding to an aircraft of the plurality of aircraft and including an optimal flight path from the starting position to the destination position.

12. The method of Claim 11, wherein culling the set of candidate next states by removing any candidate next state wherein a first next position or first next path of a first aircraft of the plurality of aircraft encroaches on at least one hazard to a threshold level includes:
removing any candidate next state wherein the first next position or the first next path encroaches on one or more of an aircraft not associated with the plurality of aircraft, a manmade obstacle, or a natural obstacle;
and
wherein the threshold level corresponds to a radius relative to at least one of the first next position or the first next path.

13. The method of Claim 11 or 12, wherein:
receiving a routing request includes receiving a routing request including ***M*** pluralities of aircraft, wherein ***M*** is an integer, each plurality of aircraft corresponding to a priority level;
and
wherein generating a plurality of flight plans based on the sequence of current states includes:
generating ***M*** pluralities of flight plans, each ***N***th plurality of flight plans corresponding to an ***N***th plurality of aircraft and to a priority level ***P*** of the ***N***th plurality, wherein ***N*** is an integer and ***N*** ≤ ***M***;
and
wherein for each Nth plurality of flight plans, the at least one hazard includes each plurality of flight plans corresponding to a priority level greater than P.

14. The method of Claim 11, 12 or 13, wherein:
receiving a routing request includes receiving a routing request including at least one aircraft team for routing through the airspace, each aircraft team comprising:
a plurality of team aircraft;
and
at least one relationship between at least two team aircraft of the plurality of team aircraft.
